# EUROPÄISCHE PATENTSCHRIFT

(11) **EP 0 366 966 B1**
(45) Veröffentlichungstag und Bekanntmachung des Hinweises auf die Patenterteilung: **20.01.1993**
(21) Anmeldenummer: 89118443.4
(22) Anmeldetag: 04.10.1989
(51) Int. Cl.: B60T 17/02, B60T 8/40, F16L 27/00

(54) **Bremsgerät für eine hydraulische Fahrzeugbremsanlage**
Brake device for a hydraulic vehicle brake installation
Dispositif de freinage pour une installation de freinage hydraulique pour véhicules

(30) Priorität: 04.11.1988 DE 3837419
(43) Veröffentlichungstag der Anmeldung: 09.05.1990
(73) Patentinhaber: ROBERT BOSCH GMBH, 70442 Stuttgart (DE)
(72) Erfinder: Kehl, Georg, D-7000 Stuttgart 40 (DE); Siegel, Heinz, D-7000 Stuttgart 40 (DE); Abbing, Andreas, Dipl.-Ing., D-7140 Ludwigsburg (DE); Rischen, Dietmar, Dipl.-Ing., D-7015 Korntal-Münchingen (DE); Bullinger, Alfred, D-7015 Korntal-Münchingen 1 (DE); Deringer, Helmut, Dipl.-Ing., D-7030 Böblingen (DE)

(56) Entgegenhaltungen:
- EP-A- 0 248 229

## Beschreibung

### Stand der Technik

Die Erfindung betrifft ein Bremsgerät für eine hydraulische Fahrzeugbremsanlage der im Oberbegriff des Anspruchs 1 definierten Gattung.

Bremsgeräte dieser Ausführung enthalten ein elektrohydraulisches Betätigungsaggregat und eine Rückförderpumpe und werden im Motorraum der Fahrzeugskarosserie montiert. Durch ungleichförmige Fördermengen in der Rückförderpumpe werden erhebliche Geräusche verursacht. Zur Körperschallentkopplung wird daher die Pumpe mittels elastischer Lager an dem Gehäuse aufgehängt, wobei beide Bauteile zueinander relativ beweglich sind. Die zwischen den beiden Gehäuseteilen vorhandenen Saug- und Druckverbindungsleitungen müssen aufgrund dessen so ausgebildet sein, daß die Beweglichkeit der Rückförderpumpe innerhalb der elastischen Lagerung gewährleistet ist.

Aus DE-OS 36 18 835 ist ein Bremsgerät der obengenannten Art bekannt. Bei diesem verlaufen in Gehäuseausbohrungen Verbindungsröhrchen zwischen der Befestigungsplatte und der Förderpumpe sowie zwischen der Förderpumpe und dem Aggregatgehäuse. Ein Nachteil dieser Erfindung liegt darin begründet, daß die Verbindungsleitungen an einer Mehrzahl von Übergängen abgedichtet werden müssen. Auch ist es erforderlich die durch Aggregat- und Förderpumpengehäuse sowie Befestigungsplatte verlaufende Durchbohrung an deren Ende in der Befestigungsplatte durch eine Abdichtungskappe abzudichten. Die Sicherung der Pumpenaufhängung wird im Fall des Versagens der Dämpfungselemente beim bezeichneten Erfindungsgegenstand durch zwei in das Aggregatgehäuse eingepreßte Stifte geschaffen, die im Aggregatgehäuse sowie in der Befestigungsplatte verankert sind. Schließlich besteht auch bei dem bezeichneten Bremsgerät die Gefahr, daß beim Ausfall der Dämpfungselemente die Verbindungsröhrchen aus den Bohrungen herausgleiten können und somit undicht werden.

### Vorteile der Erfindung

Bei einem Bremsgerät der eingangsgenannten Art wird durch die im kennzeichnenden Teil des Hauptanspruches angegebenen Merkmale eine einfache Montage sowie eine Verringerung der Anzahl der Dichtstellen erreicht.

Durch Verspannung der zwischen der Befestigungsplatte und dem Aggregatgehäuse verlaufenden Lagerrohre mittels Schrauben oder Stehbolzen ist eine besonders einfache Montage gewährleistet. Insbesondere werden durch diese neuartige Pumpenaufhängung weniger Einzelteile erforderlich. Die verspannten Rohre übernehmen beim Ausfall der Dämpfungselemente desweiteren eine Sicherheitsfunktion. Sie verhindern, daß die Verbindungsröhrchen aus den Bohrungen herausgleiten können und undicht werden.

Da vorliegend die durch Aggregatgehäuse und Förderpumpengehäuse im Bereich der Verbindungsröhrchen verlaufende Durchgangsbohrung durch einen, in einer Ausbuchtung des Förderpumpengehäuses einliegenden, Bolzen abgeschlossen wird, entfällt die aus Gründen der Elastizität bestehende Einbauerforderlichkeit weiterer, zwischen Förderpumpengehäuse und Befestigungsplatte gelegener Verbindungsröhrchen. Durch Einlagerung der Bolzen wird eine Abdichtung geschaffen, die weitere Abdichtungselemente entbehrlich macht. Das Pumpengehäuse wird trotz der Änderung nicht mit einer hydraulischen Reaktionskraft belastet. Durch die in den weiteren Ansprüchen aufgeführten Maßnahmen sind vorteilhafte Weiterbildungen und Verbesserungen des im Anspruch 1 angegebenen Bremsgerätes aufgezeigt.

Eine vorteilhafte Ausführungsform der Erfindung ergibt sich dabei insbesondere aus den Merkmalen der Ansprüche 3 und 4. Dadurch, daß das mittig durch das Förderpumpengehäuse verlaufende Lagerrohr von einer zu ihrer Mitte hin gewölbten Mantelfläche umschlossen ist, stellt die Dämpfungshülse sich zugleich als Lagerhülse dar. Diese trägt der relativen Beweglichkeit des Förderpumpengehäuses zu den übrigen Bauteilen Rechnung und ermöglicht die Elastizität der Bewegungen des Förderpumpengehäuses. Durch die vorteilhafte Ausführung des Bremsgerätes, das zwei im äußeren Bereich des Förderpumpengehäuses angeordnete, gegenüberliegende Lagerrohre vorgesehen sind, auf deren beiden Stirnenden jeweils Dämpfungshülsen mit Flanschen aufgeschoben sind, wobei die Flanschen jeweils in die zwischen Befestigungsplatte und Förderpumpengehäuse einerseits und zwischen Förderpumpengehäuse und Aggregatgehäuse andererseits gelegenen Abkoppelungsräume eingreifen wird eine Begrenzung und Abdämfpung der Schwenkbewegungen des Förderpumpengehäuses erreicht.

Eine besonders vorteilhafte Weiterbildung der Erfindung sieht vor, daß die den Verbindungsröhrchen im Förderpumpengehäuse gegenüberliegenden Bolzen mit ihrem der Befestigungsplatte zugewandten Teil an einem an der Befestigungsplatte befindlichen Dämpfungselement anliegen, das aus einer Platte aus Kunststoff oder dergleichen und einem damit verbundenen elastischen Element besteht. Auch hierdurch wird die Voraussetzung der Elastizität der Lagerung des Förderpumpengehäuses berücksichtigt, wobei gleichzeitig der Gesichtspunkt der Abdichtung der durch das Förderpumpengehäuse verlaufenden Durchbohrung mit einbezogen ist.

Eine vorteilhafte Ausführungsform der Erfindung ergibt sich insbesondere auch aus Anspruch 9. Dadurch, daß die Schrauben durch die Befestigungsplatte sowie das Förderpumpengehäuse in das Aggregatgehäuse eingeführt sind, wird eine dauerhafte Verbindung der Bauteile miteinander erreicht sowie die Montage wesentlich erleichtert, was zur Verringerung der Gesamtgestehungskosten beiträgt.

### Zeichnung

Die Erfindung wird nachfolgend anhand der Zeichnungen näher erläutert. Es zeigen:
Figur 1 eine Draufsicht des erfindungsgemäßen Bremsgerätes im Halbschnitt,
Figur 2 eine Draufsicht des erfindungsgemäßen Bremsgerätes und
Figur 3 eine Darstellung des erfindungsgemäßen Bremsgerätes von vorn betrachtet.

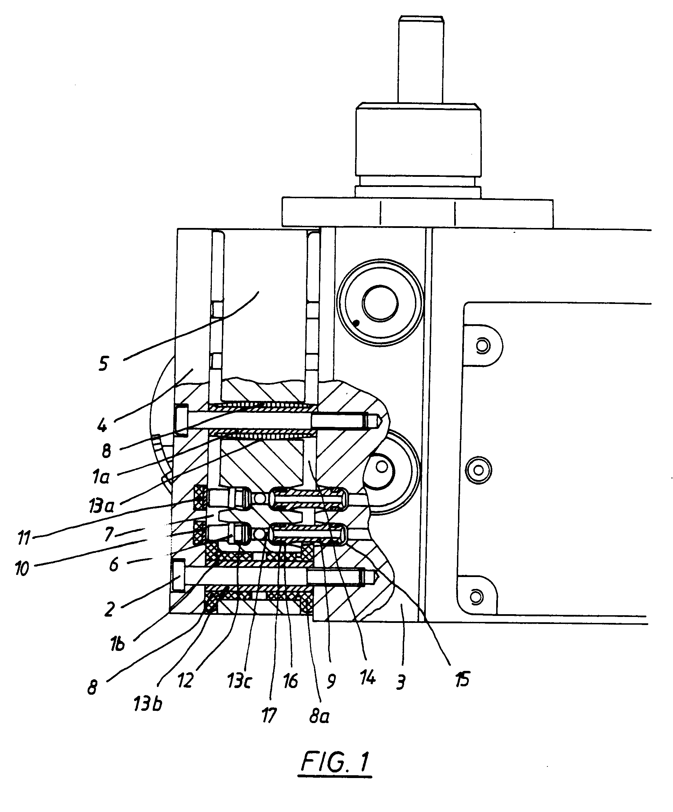

Das in den Figuren 1 bis 3 dargestellte Bremsgerät ist zur Verwendung in einer hydraulischen Zweikreis-Bremsanlage eines Kraftfahrzeuges vorgesehen, die mit einem Antiblockiersystem ausgerüstet ist. Das Bremsgerät ist integrierter Bestandteil des Antiblockiersystems, das einen elektronischen Regler und vier Radsensoren umfaßt, die in bekannter Weise die Drehzahl der einzelnen Räder erfaßen und entsprechende elektrische Signale an den elektronischen Regler liefern. Das Bremsgerät umfaßt ein Betätigungsaggregat und eine Förderpumpe. Diese Bauteile sind an einer Befestigungsplatte anmontiert und relativ zueinander beweglich.

Die in Figur 1 im Halbschnitt dargestellt Draufsicht zeigt das an einer Befestigungsplatte 4 angebrachte Förderpumpengehäuse 5 sowie das mit diesem in Verbindung stehende Aggregatgehäuse 3. Die Förderpumpe ist dabei durch Lagerrohre 1a, b mehrfach zwischen der Befestigungsplatte 4 und dem Aggregatgehäuse 3 gelagert. Die Lagerrohre 1a, b bestehen aus Distanzrohren, die zwischen dem Aggregatgehäuse 3 und der Befestigungsplatte 4 in Durchgangsbohrungen 13a, b des Förderpumpengehäuses 5 verlaufen und mittels Schrauben 2 verspannt sind. Das mittig durch das Förderpumpengehäuse 5 verlaufende Lagerrohr 1a ist von einer Dämpfungshülse 8 umschlossen, die zu ihrer Mitte hin gewölbt ist. Im äußeren Bereich des Förderpumpengehäuses 5 sind zwei weitere Lagerrohre 1b vorgesehen, von denen aus der Zeichnung jedoch lediglich eines im Schnitt ersichtlich ist. An deren jeweiligen Stirnenden sind ebenfalls Dämpfungshülsen 8 aufgeschoben, die mit einer Flansche 8a versehen sind. Die Flansche 8a greifen jeweils in die zwischen Befestigungsplatte 4 und Förderpumpengehäuse 5 einerseits und zwischen Förderpumpengehäuse 5 und Aggregatgehäuse 3 andererseits gelegenen Abkoppelungsraum 7, 14 ein.

Der zwischen Förderpumpengehäuse 5 und Aggregatgehäuse 3 befindliche Abkoppelungsraum 14 ist durch Verbindungsröhrchen 9 überbrückt, die in Gehäuseausbohrungen 15 des Förderpumpengehäuses 5 sowie des Aggregatgehäuses 3 einliegen. Die Verbindungsröhrchen sind nahe der beiden Stirnenden kugelartig verdickt und zur Abdichtung der Gehäuseausbohrungen 15 in jeder Verdickung mit einem in einer Außennut 16 einliegenden Dichtungsring 17 versehen. Die das Förderpumpengehäuse von der Gehäuseausbohrung 15, wenn auch mit geringerem Durchmesser, weiterdurchlaufende Durchgangsbohrung 13c wird auf der dem Verbindungsröhrchen 9 gegenüberliegenden Seite des Förderpumpengehäuses 5 durch Bolzen 6 abgedichtet, die ebenfalls in einer Gehäuseausbohrung 12 einliegen. Mit ihrem der Befestigungsplatte 4 zugewandten Teil liegen die Bolzen 6 an der Befestigungsplatte 4 an. In diesem Bereich ist an der Befestigungsplatte 4 ein Dämpfungselement angebracht, das aus einer Platte 10 aus Kunststoff oder dergleichen und einem daran anliegenden Element 11 aus elastischem Material besteht.

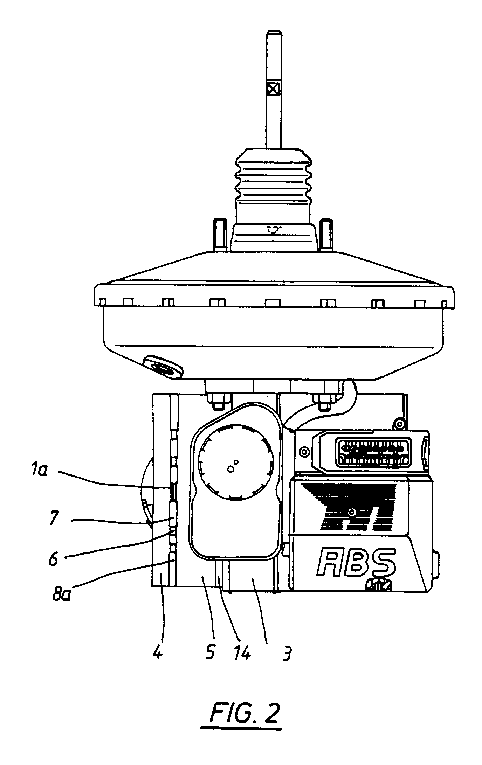

Die durch Figur 2 gezeigte Darstellung des erfindungsgemäßen Bremsgerätes veranschaulicht die Lage des Aggregat- 3 und Förderpumpengehäuses 5 sowie der Befestigungsplatte 4 innerhalb des Gesamtgerätes. Im zwischen der Befestigungsplatte 4 und dem Förderpumpengehäuse 5 gelegenen Abkoppelungsraum 7 sind die an der Befestigungsplatte 4 anliegenden Teile der Bolzen 6 sichtbar. Weiterhin ist das Lagerrohr 1a aus dieser Zeichnung ersichtlich. Die teilweise die Lagerrohre 1b umschließende Dämpfungshülse, deren Flanschen 8a an den Stirnenden der Lagerrohre in den zwischen Befestigungsplatte 4 und Förderpumpengehäuse 5 befindlichen Abkoppelungsraum 7 sowie in den zwischen Förderpumpengehäuse 5 und Aggregatgehäuse 3 befindlichen Abkoppelungsraum 14 eingreifen ist ebenfalls im Hinblick auf den Flanschteil 8a aus der Zeichnung ersichtlich.

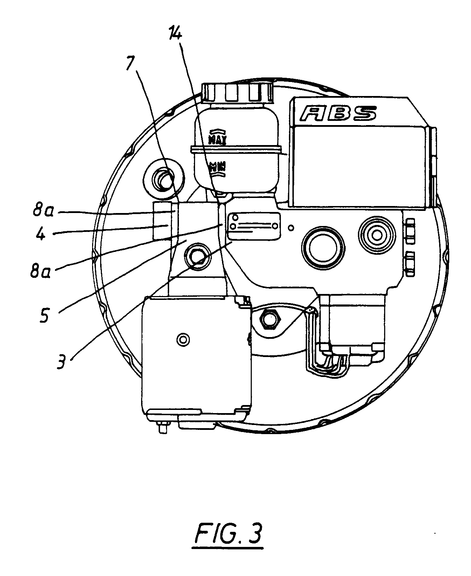

In der durch Figur 3 gezeigten Darstellung des erfindungsgemäßen Bremsgerätes, von dessen Vorderseite her gesehen, ist ebenfalls die in den Abkoppelungsräumen 7, 14 zwischen Befestigungsplatte 4 und Förderpumpengehäuse 5 sowie dem davon abgekoppelten Aggregatgehäuse 3 befindliche Flansche 8a der Dämpfungshülse dargestellt. Die weiteren erfindungsgemäßen Merkmale sind als in den Bauteilen Befestigungsplatte 4, Förderpumpengehäuse 5 und Aggregatgehäuse 3 untergebrachte Bestandteile aus der Zeichnung nicht ersichtlich.

## Patentansprüche

1. Bremsgerät für eine hydraulische Fahrzeugbremsanlage, das ein Aggregatgehäuse (3) und eine daran elastisch befestigte Förderpumpe (5) aufweist, wobei beide Bauteile (3, 5) durch mindestens eine Saug- und Druckleitung miteinander verbunden sind, die als Gehäusebohrungen in beiden Bauteilen (3, 5) ausgebildet sind und in denen mindestens ein schwenk- und längsverschiebbares Verbindungsröhrchen (9) in zwei miteinander fluchtenden Lagerbohrungen in beiden Bauteilen (3, 5) einliegt, dadurch gekennzeichnet, daß das Förderpumpengehäuse (5) Durchgangsbohrungen (13a, 13b) hat, durch die von dämpfendem, elastischem Material umschlossene Lagerrohre (1a, b) verlaufen, die mittels Schrauben (2) oder Stehbolzen zwischen Aggregatgehäuse (3) und einer Befestigungsplatte (4) verspannt sind, an der in das Förderpumpengehäuse (5) hineinragende Bolzen (6) anliegen.

2. Bremsgerät nach Anspruch 1, dadurch gekennzeichnet, daß die Lagerrohre (1a, b) aus Distanzrohren bestehen, durch die die Schrauben (2) oder Stehbolzen verlaufen.

3. Bremsgerät nach Anspruch 1 oder 2, dadurch gekennzeichnet, daß das mittig im Förderpumpengehäuse (5) angeordnete Lagerrohr (1a) von einer Dämpfungshülse (8) mit einer zu ihrer Mitte hin gewölbten Mantelfläche umschlossen ist.

4. Bremsgerät nach Anspruch 3, dadurch gekennzeichnet, daß zwei im äußeren Bereich des Förderpumpengehäuses (5) angeordnete, gegenüberliegende Lagerrohre (1b) vorgesehen sind, auf die jeweils an ihren beiden Stirnenden Dämpfungshülsen (8) mit Flanschen (8a) aufgeschoben sind, wobei die Flanschen (8a) jeweils in die zwischen Befestigungsplatte (4) und Förderpumpengehäuse (5) einerseits und zwischen Förderpumpengehäuse (5) und Aggregatgehäuse (3) andererseits gelegenen Abkoppelungsräume (7, 14) eingreifen.

5. Bremsgerät nach Anspruch 4, dadurch gekennzeichnet, daß die Dämpfungshülsen (8) aus elastischem Material wie Gummi oder dergleichen bestehen.

6. Bremsgerät nach einem der vorhergehenden Ansprüche, dadurch gekennzeichnet, daß die den Verbindungsröhrchen (9) im Förderpumpengehäuse (5) gegenüberliegenden Bolzen (6) mit ihrem, der Befestigungsplatte (4) zugewandten Teil, an einem an der Befestigungsplatte (4) befindlichen Dämpfungselement anliegen, das aus einer Platte (10) aus Kunststoff oder dergleichen und einem damit verbundenen elastischen Element (11) besteht.

7. Bremsgerät nach einem der vorhergehenden Ansprüche, dadurch gekennzeichnet, daß die Bolzen (6) mit ihrem den Verbindungsröhrchen (9) zugewandten Teil in einer Ausbohrung (12) des Förderpumpengehäuseteils (5) einliegen.

8. Bremsgerät nach einem der vorhergehenden Ansprüche, dadurch gekennzeichnet, daß die Förderpumpe im Bereich der Verbindungsröhrchen (9) und der diesen gegenüberliegenden Bolzen jeweils eine Durchgangsbohrung (13c) aufweist.

9. Bremsgerät nach einem der vorhergehenden Ansprüche, dadurch gekennzeichnet, daß die Schrauben (2) durch die Befestigungsplatte (4) sowie das Förderpumpengehäuse (5) in das Aggregatgehäuse (3) eingeführt sind.

## Claims

1. Brake device for hydraulic vehicle brake system, having a unit casing (3) and a feed pump (5) fastened elastically onto it, the two components (3, 5) being connected to one another by at least one suction and pressure conduit, which are designed as casing holes in the two components (3, 5) and within which at least one small connecting tube (9), which can be displaced pivotably and longitudinally, is located in two mutually aligned support holes in the two components (3, 5), characterised in that the feed pump casing (5) has passage holes (13a, 13b) through which extend support tubes (1a, b) enclosed by damping, elastic material, which support tubes are clamped, by means of bolts (2) or stud bolts, between the unit casing (3) and a fastening plate (4), with which pins (6) protruding into the feed pump casing (5) are in contact.

2. Brake device according to Claim 1, characterised in that the support tubes (1a, b) consist of distance tubes through which the bolts (2) or stud bolts extend.

3. Brake device according to Claim 1 or 2, characterised in that the support tube (1a) located centrally in the feed pump casing (5) is surrounded by a damping sleeve (8) with an outside surface crowned towards its centre.

4. Brake device according to Claim 3, characterised in that two support tubes (1b) are provided which are located opposite to one another in the outer region of the feed pump casing (5) and which have damping sleeves (8) with flanges (8a) pushed onto their respective ends, each of the flanges (8a) engaging in the respective decoupling spaces (7, 14) located between the fastening plate (4) and the feed pump casing (5), on the one hand, and between the feed pump casing (5) and the unit casing (3), on the other.

5. Brake device according to Claim 4, characterised in that the damping sleeves (8) consist of elastic material such as rubber or the like.

6. Brake device according to one of the preceding claims, characterised in that the pins (6) opposite to the small connecting tubes (9) in the feed pump casing (5) are in contact, by means of their parts facing towards the fastening plate (4), with a damping element located on the fastening plate (4), which damping element consists of a panel (10) made of plastic or the like and an elastic element (11) connected to it.

7. Brake device according to one of the preceding claims, characterised in that the parts of the pins (6) facing towards the small connecting tubes (9) are inserted in holes (12) of the feed pump casing part (5).

8. Brake device according to one of the preceding claims, characterised in that the feed pump has a passage hole (13c) in the region of each of the small connecting tubes (9) and the pins located opposite to them.

9. Brake device according to one of the preceding claims, characterised in that the bolts (2) are introduced through the fastening plate (4) and the feed pump casing (5) into the unit casing (3).

## Revendications

1. Dispositif de freinage pour une installation hydraulique de freinage pour véhicules, qui comprend un carter de bloc (3) et une pompe de refoulement (5) fixée élastiquement sur le carter, dans lequel les deux parties constitutives (3, 5) sont reliées l'une à l'autre par au moins une conduite d'aspiration et une conduite sous pression, qui sont constituées comme des alésages de carter dans les deux parties constitutives (3, 5) et dans lesquelles au moins un petit tube de liaison (9) pouvant être déplacé par pivotement et dans le sens longitudinal se trouve dans deux alésages de coussinet en alignement dans les deux parties constitutives (3, 5), dispositif de freinage, caractérisé en ce que le carter de la pompe de refoulement (5) a des alésages de passage (13a, 13b) à travers lesquels s'étendent les tubes de coussinet (1a, 1b) entourés d'une matière élastique d'amortissement, tubes qui sont bloqués au moyen de vis (2) ou de goujons entre le carter du bloc (3) et une plaque de fixation (4), sur laquelle reposent les goujons (6) pénétrant dans le carter de la pompe de refoulement (5).

2. Dispositif de freinage selon la revendication 1, caractérisé en ce que les tubes de coussinet (1a, b) consistent en des tubes d'écartement à travers lesquels s'étendent les vis (2) ou des goujons.

3. Dispositif de freinage selon la revendication 1 ou 2, caractérisé en ce que le tube de coussinet (la) disposé au milieu dans le carter de la pompe de refoulement (5) est entouré par une douille amortisseuse (8) avec une enveloppe courbée vers son milieu.

4. Dispositif de freinage selon la revendication 3, caractérisé en ce que sont prévus deux tubes de coussinet (1b) disposés dans la zone extérieure du carter de pompe de refoulement (5), sur lesquels sont respectivement enfilées à leurs extrémités frontales des douilles amortisseuses (8) avec des rebords (8a), les rebords (8a) venant respectivement en prise dans des espaces (7, 14) de désaccouplement situés entre la plaque de fixation (4) et le carter de la pompe de refoulement (5) d'une part et entre le carter de la pompe de refoulement (5) et le carter du bloc (3) d'autre part.

5. Dispositif de freinage selon la revendication 4, caractérisé en ce que les douilles amortisseuses (8) consistent en une matière élastique telle que le caoutchouc ou analogue.

6. Dispositif de freinage selon l'une des revendications précédentes, caractérisé en ce que les goujons (6) se trouvant en regard des petits tubes de liaison (9) dans le carter de la pompe de refoulement (5) avec leur partie tournée vers la plaque de fixation (4) reposent sur un élément amortisseur se trouvant sur la plaque de fixation (4), qui consiste en une plaque (10) en matière plastique ou analogue et en un élément élastique (11) relié avec celle-ci.

7. Dispositif de freinage selon l'une des revendications précédentes, caractérisé en ce que les goujons (6) se trouvent par leur partie tournée vers les petits tubes de liaison (9) dans un évidement (12) du carter de la pompe de refoulement (5).

8. Dispositif de freinage selon l'une des revendications précédentes, caractérisé en ce que la pompe de refoulement dans la zone des petits tubes de liaison (9) et des goujons qui se trouvent en regard de ceux-ci, présente un alésage de passage (13c).

9. Dispositif de freinage selon l'une des revendications précédentes, caractérisé en ce que les vis (2) sont introduites à travers la plaque de fixation (4) ainsi que le carter de la pompe de refoulement (5) dans le carter du bloc (3).
